# EUROPEAN PATENT SPECIFICATION

(11) **EP 4 223 439 B1**
(45) Date of publication and mention of the grant of the patent: **03.12.2025**
(21) Application number: 22155102.1
(22) Date of filing: 04.02.2022
(51) Int. Cl.: B23B 29/24, B23B 29/04

(54) **MACHINE TOOL HAVING A CUTTING UNIT WITH A QUICK-RELEASE ELEMENT FOR CONNECTION WITH A HOLDER**
WERKZEUGMASCHINE AUFWEISEND EINE SCHNEIDEINHEIT MIT EINEM SCHNELL LÖSBAREN ELEMENT ZUR VERBINDUN GMIT EINEM HALTER
MACHINE-OUTIL COMPRENANT UNE UNITÉ DE COUPE AVEC UN ÉLÉMENT À LIBÉRATION RAPIDE POUR CONNECTION AVEC UN PORTE-OUTIL

(43) Date of publication of application: 09.08.2023
(73) Proprietor: MONKULA ENTERPRISE CO., LTD., Taichung City 407 (TW)
(72) Inventor: Lin, Kuo-Chi, 407 Taichung City (TW)
(74) Representative: Lang, Christian

(56) References cited:
- DE-A1- 102019 112 337
- DE-U1- 202010 014 484
- US-A- 5 255 582
- US-A1- 2018 361 487

## Description

### BACKGROUND OF INVENTION

### 1. FIELD OF INVENTION

The present invention relates to a machine tool according to the preamble of claim 1.

### 2. RELATED PRIOR ART

A machine tool such as a lathe includes multiple cutting units connected to a turret by an identical number of holders. Each of the cutting units is used to reduce an external or internal diameter of a workpiece.

In some cases, such a cutting unit is made in one piece with such a holder. The holder has to be disposed together with the cutting unit when the cutting unit is worn out or damaged. This is a waste.

In some other cases, such a cutting unit is connected to such a holder by a threaded bolt. The threaded bolt is inserted in a countersink hole made in the holder and a screw hole made in the cutting unit. It however takes quite some time to adequately rotate the threaded bolt to fasten the cutting unit to the holder. Further, document US 5 255 582 A discloses a tool holder for being inserted in a tool slot of a lathe turret, wherein said tool holder includes a cutting unit and a clamping unit, and wherein the clamping unit is fixed to the tool holder slot by one or more screws having threaded ends and being passed through corresponding bores in the clamping unit and threaded into corresponding openings in the tool holder slot. Thereby, a machine tool according to the preamble of claim 1 is known from this document.

The present invention is therefore intended to obviate or at least alleviate the problems encountered in the prior art.

### SUMMARY OF INVENTION

It is the primary objective of the present invention to provide a convenient machine tool.

To achieve the foregoing objective, the machine tool according to claim 1 includes a cutting unit and multiple quick-release elements. The cutting unit includes a handle including two lateral facets, an upper facet, multiple bores made in the upper facet, and multiple cutouts made in at least one of the lateral facets. Each of the cutouts is in communication with a corresponding one of the bores. Each of the quick-release elements includes a cam including an operative portion located further from a rotational axis than an idle portion. Each of the cams is inserted in a corresponding one of the bores. The idle portion of each of the cams is located in the corresponding bore when each of the cams is at a first angle. The operative portion of each of the cams extends from the corresponding bore through the corresponding cutout when each of the cams is at a second angle.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is an exploded view of machine tool according to the first embodiment of the present invention;
FIG. 2 is a top view of a cutting unit of the machine tool depicted in FIG. 1;
FIG. 3 is a perspective view of multiple quick-release elements and the cutting unit shown in FIG. 2;
FIG. 4 is a perspective view of the machine tool shown in FIG. 1;
FIG. 5 is a top view of the cutting unit shown in FIG. 3;
FIG. 6 is a partial and cross-sectional view taken along a line A-A of the cutting unit shown in FIG. 5;
FIG. 7 is a top view of the cutting unit in another position than shown in FIG. 5;
FIG. 8 is a partial and cross-sectional view taken along a line B-B of the cutting unit shown in FIG. 7; and
FIG. 9 is a side view of quick-release elements inserted in a cutting unit of a machine tool according to the second embodiment of the present invention.

### DETAILED DESCRIPTION OF EMBODIMENTS

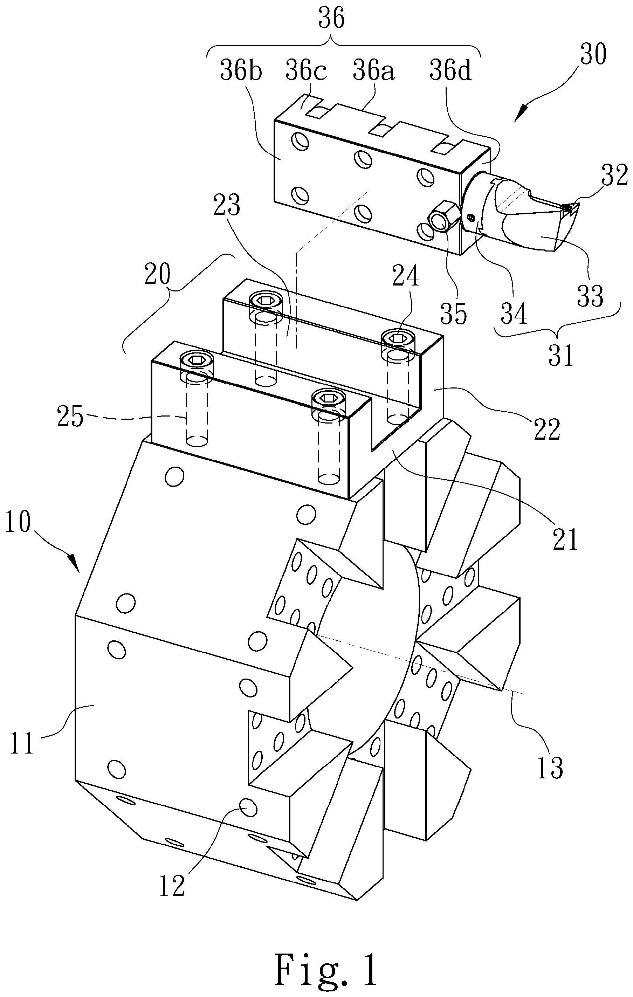

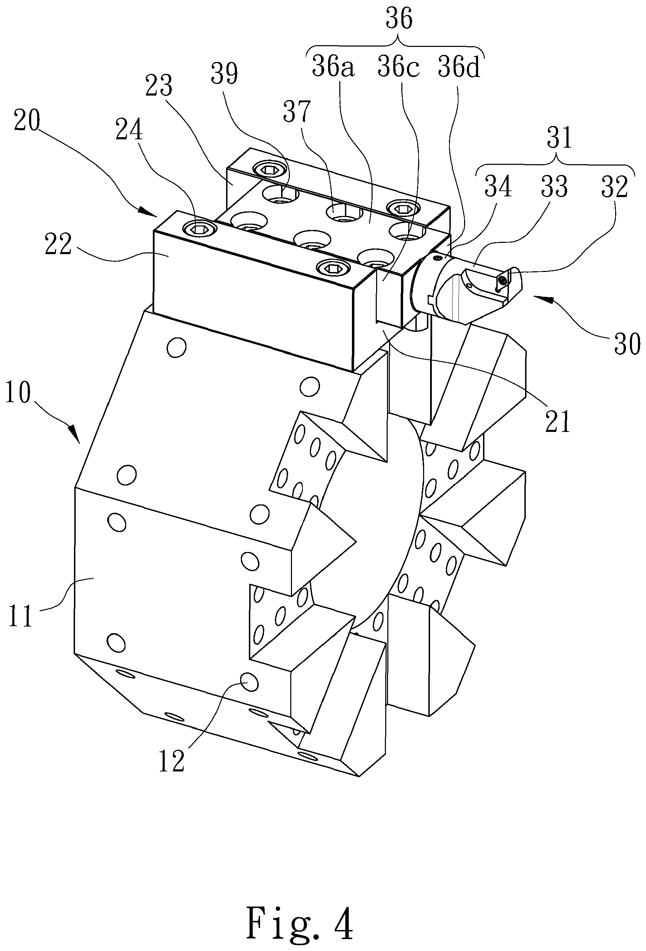

Referring to FIGS. 1 and 4, a machine tool includes a turret 10, a holder 20 and a cutting unit 30 according to a first embodiment of the present invention. The machine tool can be a lathe for example. The turret 10 is a polygonal element including multiple faces 11 arranged around an axis 13. In practice, the machine tool includes multiple holders 20 and cutting units 30. Each of the holders 20 is connected to a corresponding one of the faces 11 of the turret 10. Each of the cutting units 30 is held by a corresponding one of the holders 20. However, only one holder 20 and cutting unit 30 is shown and described for briefness and clarity. To this end, each of the faces 11 is formed with multiple screw holes 12 in perpendicular to the axis 13. Each of the screw holes 12 is used to receive a fastener 24 such as a threaded bolt.

The holder 20 is a U-shaped element including two walls 22 formed on a base 21. A space 23 is defined by the walls 22 and the base 21. That is, the space 23 is defined in the holder 20. Each of the walls 22 is formed with two countersink holes 25. In assembly, the countersink holes 25 are aligned to the screw holes 12 made in one of the faces 11 of the turret 10. A fastener 24 is inserted in each of the screw holes 12 via a corresponding one of the countersink holes 25. Thus, the holder 20 is connected to the corresponding face 11 of the turret 10.

In another embodiment, some more cutting units 30 are held by some more multiple holders 20 connected to a front face of the turret 10. To this end, the front face of the turret 10 is formed with multiple screw holes 12 that are in parallel to the axis 13, instead of in perpendicular.

The cutting unit 30 includes a cutter 31 and a handle 36. The cutter 31 includes a blade 32, a shank 33 and a root 34. A front end of the root 34 is connected to a rear end of the shank 33. The blade 32 is connected to a front end of the shank 33. The blade 32 is detachable from the shank 33 for maintenance or replacement.

The handle 36 is a rectangle formed with an upper facet 36a, a lower facet 36b, two lateral facet 36c and two end facets 36d. A rear end of the root 34 is connected to one of the end facets 36d, i.e., a front facet, of the handle 36. Thus, the blade 32 is connected to the handle 36.

A joint 35 is formed on or connected to the lower facet 36b of the handle 36. A tube (not shown) is connected to the handle 36 by the joint 35 so that coolant can be pumped into the handle 36 via the tube. The coolant is used to cool the blade 32 of the cutter 31 of the cutting unit 30.

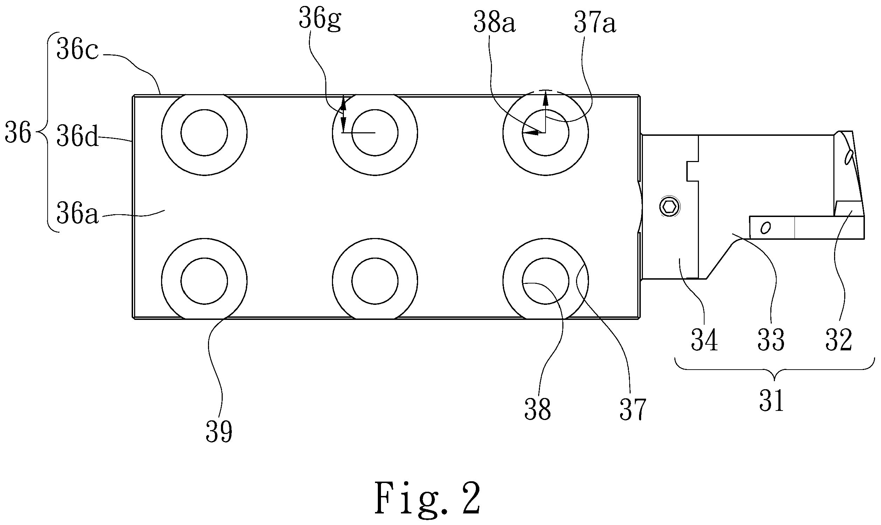

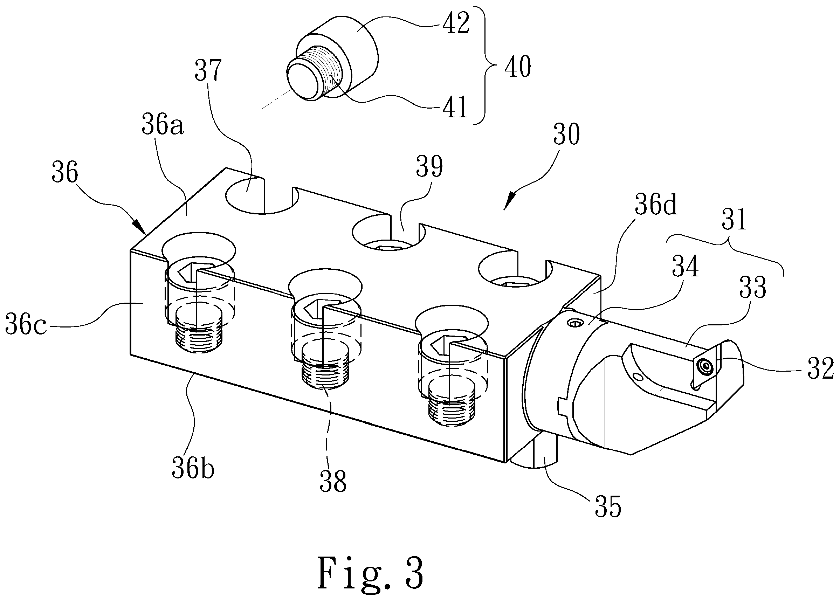

Referring to FIG. 2, the handle 36 includes multiple bores 37, multiple screw holes 38 and multiple cutouts 39. The bores 37 are made in the upper facet 36a of the handle 36 (FIG. 3). Each of the screw holes 38 is in axial communication with a corresponding one of the bores 37 so that they become a countersink hole. Each of the cutouts 39 is made in one of the lateral facets 36c of the handle 36. Each of the cutouts 39 is in radial communication with a corresponding one of the bores 37.

A radius 37a of each of the bores 37 is larger than a radius 38a of each of the screw holes 38. The radius 37a of each of the bores 37 is larger than a distance 36g of the axis of each of the bores 37 from one of the lateral facets 36c of the handle 36, thereby making each of the cutouts 39.

There are multiple quick-release elements 40 corresponding to the countersink holes of the handle 36. Each of the quick-release elements 40 includes a threaded rod 41 extending from a lower face of a cam 42. The threaded rod 41 is made in one piece with the cam 42.

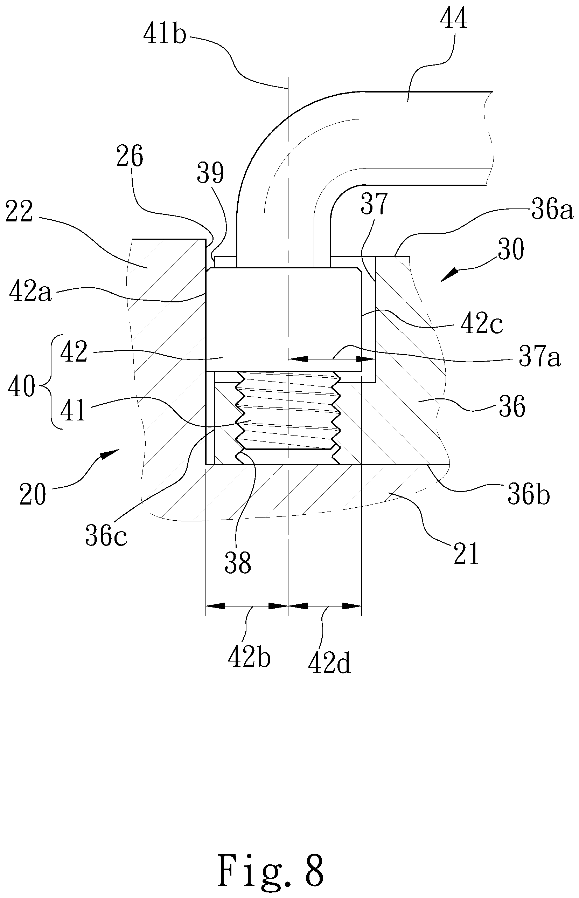

The threaded rod 41 of each of the quick-release elements 40 is inserted in a corresponding one of the screw holes 38 while the cam 42 of the same quick-release element 40 is inserted in the corresponding one of the bores 37 of the handle 36. The cam 42 includes a to-be-driven portion 43 made in an upper facet. The to-be-driven portion is engageable with a wrench 44 (FIG. 8) so that the wrench 44 is operable to rotate the quick-release element 40. Preferably, the wrench 44 is an Allen wrench (or "key"), and the to-be-driven portion 43 of the cam 42 is a hexagonal cavity accordingly.

Referring to FIG. 4, the holder 20 is connected to the related face 11 of the turret 10 by the fasteners 24. The handle 36 of the cutting unit 30 is located in the space 23 of the holder 20. The handle 36 of the cutting unit 30 is locked to the holder 20 by the quick-release elements 40. How the quick-release elements 40 lock the cutting unit 30 to the holder 20 will be described in detail later.

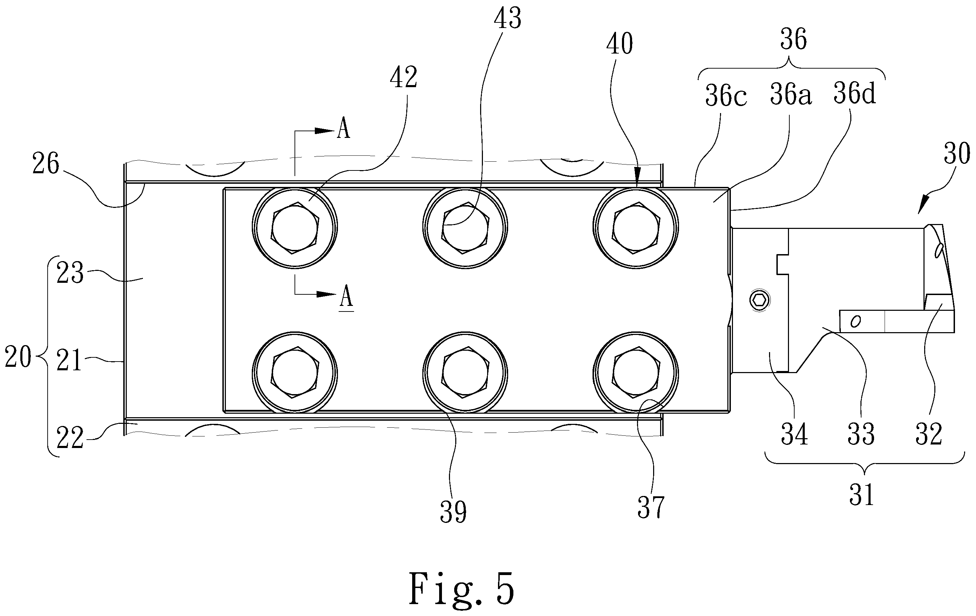

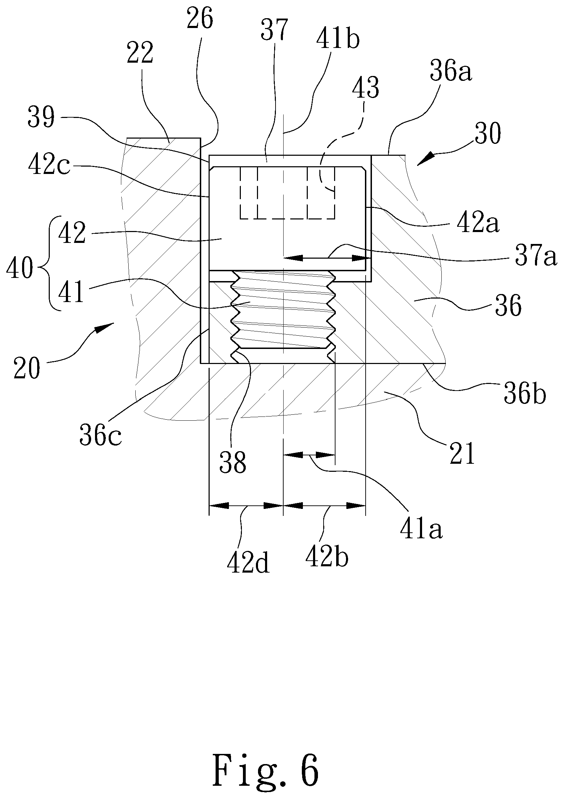

As mentioned above, the threaded rods 41 of the quick-release elements 40 are inserted in the screw holes 38 of the handle 36 of the cutting unit 30 (FIG. 6) while the cams 42 of the quick-release elements 40 are located in the bores 37 of the handle 36 of the cutting unit 30 (FIG. 5). The threaded rods 41 are adequately tightened in the screw holes 38 to keep the quick-release elements 40 in the handle 36.

Referring to FIG. 6, there is a common axis 41b for the threaded rod 41 and the to-be-driven portion 43 of the cam 42. The threaded rod 41 is made with a radius 41a identical to the radius 38a of the screw hole 38 (FIG. 2).

Preferably, the periphery (or "profile") of the cam 42 is a perfect circle with a center in the lower face, and the threaded rod 41 extends from the center of the lower face of the cam 42. However, in another embodiment, the periphery (or "profile") of the cam 42 can be like the profile of an egg, i.e., the cam 42 is formed with a relatively sharp lobe formed opposite to a relatively blunt or obtuse portion. In both cases, the periphery of the cam 42 includes an operative portion 42a and an idle portion 42c. Preferably, the operative portion 42a is located opposite to the idle portion 42c. The operative portion 42a is at a distance 42b from the axis 41b. The idle portion 42c is at a distance 42d from the axis 41b. The distance 42b is longer than the distance 36g. The distance 42d is equal to or shorter than the distance 36g so that the operative portion 42a is exposed to the exterior of the bore 37 through the cutout 39 when the cam 42 is at a certain angle about the axis 41b in the bore 37. Thus, the distance 42b is longer than the distance 42d. The distance 42b and 42d are both longer than the radius 38a.

Referring to FIGS. 5 and 6, the cam 42 is at a first angle about the axis 41b in the bore 37. The idle portion 42c of each of the cams 42 is aligned with a corresponding one of the cutouts 39. The idle portion 42c of each of the cams 42 does not extend from a corresponding one of the bores 37 via the corresponding cutout 39 because the distance 42d is equal to or smaller than the distance 36g as mentioned above. Thus, the idle portion 42c of each of the cams 42 is not abutted against an internal side 26 of a corresponding one of the walls 22. Hence, the handle 36 is allowed to enter or leave the space 23 of the holder 20 easily.

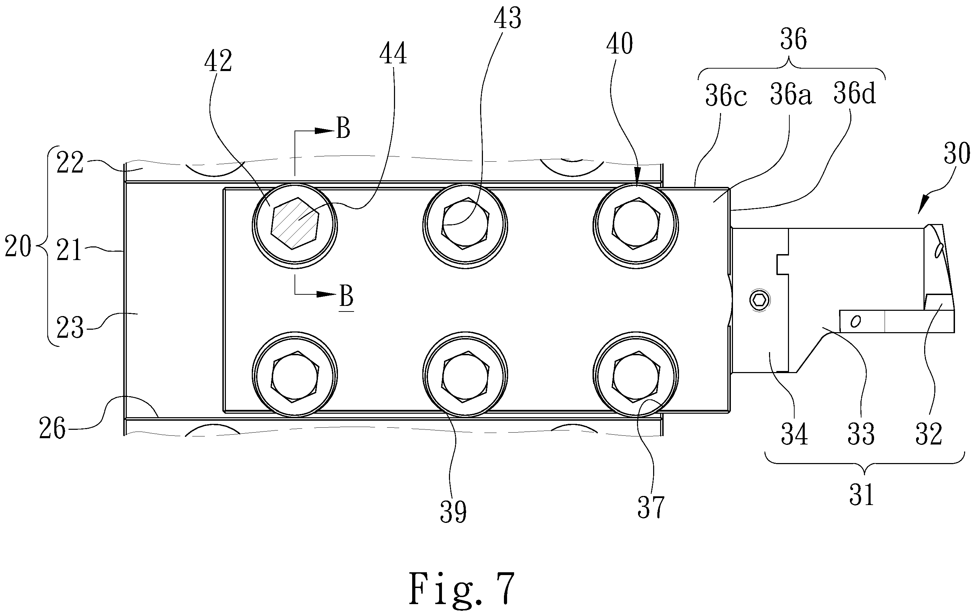

Referring to FIGS. 7 and 8, the cam 42 is at a second angle about the axis 41b in the bore 37. The second angle is about 180 degrees from the first angle. The operative portion 42a of each of the cams 42 is aligned with the corresponding cutout 39. The operative portion 42a of each of the cams 42 does not extend from the corresponding bore 37 through the corresponding cutout 39 because the distance 42b is longer than the distance 36g as mentioned above. Thus, the operative portion 42a of each of the cams 42 is not abutted against the internal side 26 of the corresponding wall 22. Hence, the handle 36 is kept in the space 23 of the holder 20 firmly.

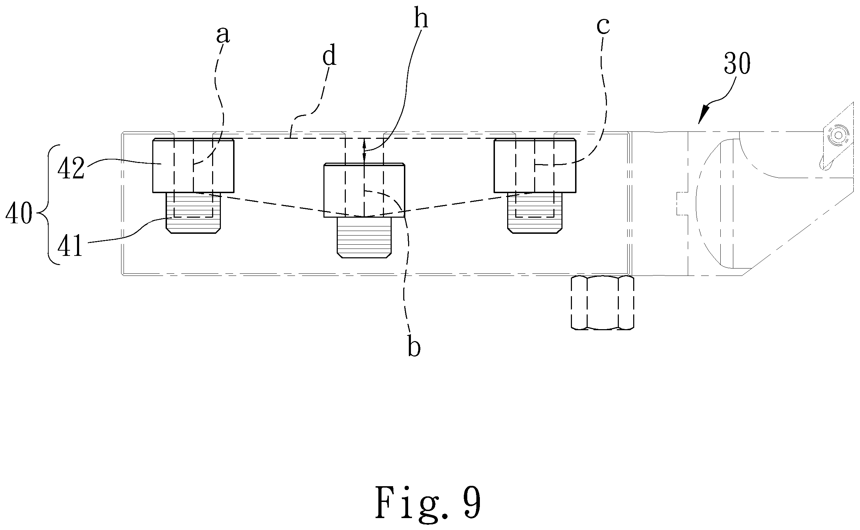

Referring to FIG. 9, there is shown a cutting unit 30 according to a second embodiment of the present invention. The second embodiment is like the first embodiment except that two of the bores 37 are deeper than the other bores 37 by a difference h. Thus, two of the cams 42 are located lower than the other cams 42 when the cams 42 are located in the bores 37. Hence, the internal side 26 of each of the walls 22 contacts the operative portions 42 of three of the cams 42 at three lines a, b and c. The lines a, b and c cover an area d. The second embodiment is expected to keep the handle 36 in the holder 20 better than the first embodiment.

The present invention has been described via the illustration of the embodiments. Those skilled in the art can derive variations from the embodiments without departing from the scope of the present invention. Therefore, the embodiments shall not limit the scope of the present invention defined in the claims.

## Claims

1. A machine tool comprising:
a cutting unit (30) comprising a handle (36) comprising two lateral facets (36c), an upper facet (36a), multiple bores (37) made in the upper facet (36a), and multiple cutouts (39) made in at least one of the lateral facets (36c); and
multiple quick-release elements (40);
wherein
each of the cutouts (39) is in communication with a corresponding one of the bores (37); **characterised in that**,
each quick-release element (40) comprising a cam (42) comprising an idle portion (42c) and an operative portion (42a) located further from a rotational axis (41b) than the idle portion (42c), wherein each of the cams (42) is inserted in a corresponding one of the bores (37), wherein the idle portion (42c) of each of the cams (42) is located in the corresponding bore (37) when each of the cams (42) is at a first angle; and wherein the operative portion (42a) of each of the cams (42) extends from the corresponding bore (37) via the corresponding cutout (39) when each of the cams (42) is at a second angle.

2. The machine tool according to claim 1, wherein the first and second angles are about 180 degrees from each other.

3. The machine tool according to claim 1, comprising multiple quick-release elements (40) each of which comprises a cam (42), wherein the handle (36) comprises multiple bores (37) for containing the cams (42) and multiple cutouts (39) through which the operative portions (42a) of the cams (42) are extensible from the bores (37).

4. The machine tool according to claim 3, wherein some of the cutouts (39) are made in one of the lateral facets (36c), and the remaining ones of the cutouts (39) are made in the remaining one of the lateral facets (36c).

5. The machine tool according to claim 3, wherein the handle (36) further comprises multiple screw holes (38) made deeper than the bores (37) in the upper facet (36a), wherein each of the screw holes (38) is in communication with a corresponding one of the bores (37), wherein each of the quick-release elements (40) further comprises a threaded rod (41) extending from the cam (42), and wherein each of the quick-release elements (40) is inserted in a corresponding one of the screw holes (38).

6. The machine tool according to claim 5, wherein some of the bores (37) are made deeper than the remaining ones of the bores (37) so that some of the cams (42) are located lower than the remaining ones of the cams (42) by a distance (h).

7. The machine tool according to claim 1, the cam (42) comprises a to-be-driven portion (43) for engagement with a tool operable to rotate the cam (42).

8. The machine tool according to claim 7, wherein the to-be-driven portion (43) of the cam (42) is a hexagonal cavity for receiving an Allen key.

9. The machine tool according to claim 1, wherein the handle (36) further comprises a joint (35) for connection to a tube to pump coolant into the cutting unit (30).

10. The machine tool according to claim 1, further comprising a holder (20) comprising two walls (22) located on two opposite sides of the handle (36), wherein the operative portion (42a) of the cam (42) abuts against one of the walls (22) when the cam (42) is at the second angle.

## Patentansprüche

1. Maschinenwerkzeug, welches umfasst:
eine Schneideinheit (30), die einen Griff (36) umfasst, der zwei seitliche Facetten (36c), eine obere Facette (36a), mehrere in der oberen Facette (36a) ausgebildete Bohrungen (37) und mehrere Ausschnitte (39), die in mindestens einer der seitlichen Facetten (36c) ausgebildet sind, umfasst; und
mehrere Schnellspannelemente (40);
wobei
jeder der Ausschnitte (39) mit einer korrespondierenden der Bohrungen (37) in Verbindung steht;
**dadurch gekennzeichnet, dass**
jedes Schnellspannelement (40) einen Nocken (42) umfasst, der einen Leerlaufabschnitt (42c) und einen Arbeitsabschnitt (42a), der weiter von einer Drehachse (41b) entfernt ist als der Leerlaufabschnitt (42c), umfasst, wobei jeder der Nocken (42) in eine korrespondierende der Bohrungen (37) eingesetzt ist, wobei sich der Leerlaufabschnitt (42c) von jedem der Nocken (42) in der korrespondierenden Bohrung (37) befindet, wenn jeder der Nocken (42) sich in einem ersten Winkel befindet; und wobei sich der Arbeitsabschnitt (42a) von jedem der Nocken (42) aus der korrespondierenden Bohrung (37) über den korrespondierenden Ausschnitt (39) erstreckt, wenn jeder der Nocken (42) sich in einem zweiten Winkel befindet.

2. Maschinenwerkzeug nach Anspruch 1, bei welchem der erste und der zweite Winkel etwa 180 Grad voneinander entfernt sind.

3. Maschinenwerkzeug nach Anspruch 1, welches mehrere Schnellspannelemente (40) umfasst, von denen jedes einen Nocken (42) umfasst, wobei der Griff (36) mehrere Bohrungen (37) zur Aufnahme der Nocken (42) und mehrere Ausschnitte (39) aufweist, durch welche die Arbeitsabschnitte (42a) der Nocken (42) aus den Bohrungen (37) ausfahrbar sind.

4. Maschinenwerkzeug nach Anspruch 3, bei welchem einige der Ausschnitte (39) in einer der seitlichen Facetten (36c) ausgebildet sind, und die übrigen der Ausschnitte (39) in der verbleibenden der seitlichen Facetten (36c) ausgebildet sind.

5. Maschinenwerkzeug nach Anspruch 3, bei welchem der Griff (36) ferner mehrere Schraubenlöcher (38) umfasst, die tiefer ausgebildet sind als die Bohrungen (37) in der oberen Facette (36a), wobei jedes der Schraubenlöcher (38) mit einer korrespondierenden der Bohrungen (37) in Verbindung steht, wobei jedes der Schnellspannelemente (40) ferner eine Gewindestange (41) umfasst, die sich von dem Nocken (42) erstreckt, und wobei jedes der Schnellspannelemente (40) in ein korrespondierendes der Schraubenlöcher (38) eingesetzt ist.

6. Maschinenwerkzeug nach Anspruch 5, bei welchem einige der Bohrungen (37) tiefer ausgebildet sind als die übrigen der Bohrungen (37), sodass einige der Nocken (42) sich um einen Abstand (h) tiefer als die übrigen Nocken (42) befinden.

7. Maschinenwerkzeug nach Anspruch 1, bei welchem der Nocken (42) einen anzutreibenden Abschnitt (43) zum Eingriff mit einem Werkzeug, das zum Drehen des Nockens (42) betätigt werden kann, umfasst.

8. Maschinenwerkzeug nach Anspruch 7, bei welchem der anzutreibende Abschnitt (43) des Nockens (42) eine sechseckige Vertiefung zur Aufnahme eines Inbusschlüssels ist.

9. Maschinenwerkzeug nach Anspruch 1, bei welchem der Griff (36) ferner einen Anschluss (35) zur Verbindung mit einem Rohr zum Pumpen von Kühlmittel in die Schneideinheit (30) umfasst.

10. Maschinenwerkzeug nach Anspruch 1, welches ferner einen Halter (20) umfasst, der zwei Wände (22) umfasst, die sich an zwei gegenüberliegenden Seiten des Griffs (36) befinden, wobei der Arbeitsabschnitt (42a) des Nockens (42) an einer der Wände (22) anliegt, wenn sich der Nocken (42) in dem zweiten Winkel befindet.

## Revendications

1. Machine-outil comprenant :
une unité de découpe (30) comprenant une poignée (36) comprenant deux facettes latérales (36c), une facette supérieure (36a), plusieurs alésages (37) réalisés dans la facette supérieure (36a), et plusieurs découpes (39) réalisées dans au moins l'une des facettes latérales (36c) ; et
plusieurs éléments à libération rapide (40) ; dans laquelle
chacune des découpes (39) est en communication avec un alésage correspondant parmi les alésages (37) ; **caractérisée en ce que**,
chaque élément à libération rapide (40) comprenant une came (42) comprenant une partie inactive (42c) et une partie active (42a) située plus loin d'un axe de rotation (41b) que la partie inactive (42c), dans laquelle chacune des cames (42) est insérée dans un alésage correspondant parmi les alésages (37), dans laquelle la partie inactive (42c) de chacune des cames (42) est située dans l'alésage (37) correspondant lorsque chacune des cames (42) se trouve au niveau d'un premier angle ; et dans laquelle la partie active (42a) parmi chacune des cames (42) s'étend de l'alésage (37) correspondant par le biais de la découpe (39) correspondante lorsque chacune des cames (42) se trouve au niveau d'un second angle.

2. Machine-outil selon la revendication 1, dans laquelle les premier et second angles sont à environ 180 degrés l'un de l'autre.

3. Machine-outil selon la revendication 1, comprenant plusieurs éléments à libération rapide (40) dont chacun comprend une came (42), dans laquelle la poignée (36) comprend plusieurs alésages (37) destinés à contenir les cames (42) et plusieurs découpes (39) à travers lesquelles les parties actives (42a) des cames (42) peuvent s'étendre depuis les alésages (37).

4. Machine-outil selon la revendication 3, dans laquelle certaines des découpes (39) sont réalisées dans l'une des facettes latérales (36c), et les découpes restantes des découpes (39) sont réalisées dans la facette restante des facettes latérales (36c).

5. Machine-outil selon la revendication 3, dans laquelle la poignée (36) comprend en outre plusieurs trous de vis (38) réalisés plus profondément que les alésages (37) dans la facette supérieure (36a), dans laquelle chacun des trous de vis (38) est en communication avec un alésage correspondant parmi les alésages (37), dans laquelle chacun des éléments à libération rapide (40) comprend en outre une tige filetée (41) s'étendant depuis la came (42), et dans laquelle chacun des éléments à libération rapide (40) est inséré dans un trou de vis correspondant parmi les trous de vis (38).

6. Machine-outil selon la revendication 5, dans laquelle certains des alésages (37) sont réalisés plus profondément que les alésages restants des alésages (37) de sorte que certaines cames (42) sont situées plus bas que les cames restantes des cames (42) par une distance (h).

7. Machine-outil selon la revendication 1, la came (42) comprend une partie à entraîner (43) destinée à être mise en prise avec un outil permettant de faire tourner la came (42).

8. Machine-outil selon la revendication 7, dans laquelle la partie à entraîner (43) de la came (42) est une cavité hexagonale destinée à recevoir une clé Allen.

9. Machine-outil selon la revendication 1, dans laquelle la poignée (36) comprend en outre un joint (35) destiné à être relier à un tuyau pour pomper le liquide de refroidissement dans l'unité de découpe (30).

10. Machine-outil selon la revendication 1, comprenant en outre un porte-outil (20) comprenant deux parois (22) situées sur deux côtés opposés de la poignée (36), dans laquelle la partie active (42a) de la came (42) vient en butée contre l'une des parois (22) lorsque la came (42) se trouve au niveau du second angle.
